Europäisches Patentamt

European Patent Office

Office européen des brevets

(11) Veröffentlichungsnummer : **0 029 939**
**B1**

(12) **EUROPÄISCHE PATENTSCHRIFT**

(45) Veröffentlichungstag der Patentschrift :
01.06.83

(21) Anmeldenummer : 80106955.0

(22) Anmeldetag : 11.11.80

(51) Int. Cl.³ : **F 23 D 13/42, F 23 L 15/00**

(54) **Industriebrenner.**

(30) Priorität : **29.11.79 DE 2948048**

(43) Veröffentlichungstag der Anmeldung :
**10.06.81 Patentblatt 81/23**

(45) Bekanntmachung des Hinweises auf die Patenterteilung : **01.06.83 Patentblatt 83/22**

(84) Benannte Vertragsstaaten :
**AT FR GB IT**

(56) Entgegenhaltungen :
**AT B 223 729**
**AT B 287 163**
**FR A 2 378 236**

(73) Patentinhaber : **Aichelin GmbH**

**D-7015 Korntal-Münchingen 1 (DE)**

(72) Erfinder : **Wünning, Joachim, Dr.-Ing.**
**Bergstrasse 20**
**D-7025 Leonberg 7 (DE)**

(74) Vertreter : **Patentanwälte Dipl.-Ing. W. Scherrmann**
**Dr.-Ing. R. Rüger**
**Webergasse 3 Postfach 348**
**D-7300 Esslingen (Neckar) (DE)**

Industriebrenner

Die Erfindung betrifft einen Industriebrenner mit rekuperativer Luftvorwärmung für gasförmige oder flüssige Brennstoffe, insbesondere zur Beheizung von Ofenräumen in Industrieöfen, mit einem in einem koaxialen keramischen Brennrohr mündenden Luftzufuhrrohr, das einen Teil eines auf der einen Seite von den Verbrennungsgasen und auf der anderen Seite im Gegenstrom von der Verbrennungsluft bestrichenen Rekuperator bildet und ein bis in den Bereich der Brennermündung führendes Brennstoffzufuhrrohr kleineren Durchmessers umschließt, wobei in dem Luftzufuhrrohr ein mit diesem einen der Verbrennungsluftzufuhr dienenden Ringraum begrenzender Luftleitzylinder angeordnet ist.

Ein solcher Industriebrenner, wie er beispielsweise in der DE-OS 2 742 070 beschrieben ist, dient zur Beheizung von Strahlrohren oder zu direkten Beheizung von Ofenräumen in Industrieöfen. Durch den eingebauten Rekuperator wird den Verbrennungsabgasen ein Teil ihrer Wärme entzogen, die zur Vorwärmung der Verbrennungsluft benutzt wird, um damit den Wirkungsgrad zu verbessern. Mit zunehmender Luftvorwärmung treten aber insbesondere in dem Brennermündungsbereich, d. h. in der Brennstoff-Luft-Mischzone und in dem Brennraum selbst erhebliche konstruktive Schwierigkeiten auf. Diese Bauteile werden nämlich mit zunehmender Lufttemperatur thermisch so stark beansprucht, daß auf keramische Werkstoffe für das Brennrohr ausgewichen werden muß, dessen Verbindung und Abdichtung mit dem einen Teil des Rekuperators bildenden metallischen Luftzufuhrrohr Probleme aufwirft.

Das metallische Luftzufuhrrohr weist einen anderen thermischen Ausdehnungskoeffizienten wie das keramische Brennrohr auf, welches die eigentliche Brennkammer umschließt. Da das keramische Brennrohr gegen Spannungsbeanspruchung sehr empfindlich ist, besteht die Gefahr, daß es in dem Anschlußbereich an das Luftzufuhrrohr ausbricht, womit der Brenner unbrauchbar wird. Es ist nämlich zu bedenken, daß bei einer Auslegung des Rekuperators für eine Verbrennungsluftvorwärmung bis auf 50 %, vorzugsweise aber über 60 % der Ofengastemperatur, die Brennermündung eine Temperatur annimmt, die etwa 80 bis 90 % der Ofentemperatur erreicht. Das bedeutet, daß bei einer Prozeßtemperatur von 1 200 °C sich der Mündungsbereich des Brenners auf einer Temperatur von über 1 000 °C befindet. Bei diesen Temperaturen wird auch die metallische Brennermündung in Mitleidenschaft gezogen. Es wurden deshalb Industriebrenner mit rekuperativer Luftvorwärmung bisher nicht mit so hoher Verbrennungsluftvorwärmung betrieben.

Aufgabe der Erfindung ist es, einen Industriebrenner zu schaffen, der mit einer verhältnismäßig starken Vorwärmung der Verbrennungsluft und damit mit einem hohen Wirkungsgrad arbeitet, ohne daß im Bereiche der Brennermündung eine unzulässige Beanspruchung des Rekuperators bzw. des Luftzufuhrrohres, des Brennrohres oder anderer Teile auftritt, durch die die Lebensdauer des Brenners oder dessen Betriebssicherheit beeinträchtigt würden.

Zur Lösung dieser Aufgabe ist der eingangs genannte Industriebrenner erfindungsgemäß dadurch gekennzeichnet, daß an den Ringraum im Bereiche der Mündung des Luftzufuhrrohres eine an der Innenwandung des Brennrohres angeordnete Ringdüse angeschlossen ist, aus der die Verbrennungsluft mit erhöhter Geschwindigkeit längs der Innenwandung des Brennrohres in Gestalt eines ringförmigen Luftstrahles austritt und daß das Luftzufuhrrohr an der Brennermündung im Bereiche seines Endteiles zusätzlich durch zwischen dem Luftzufuhrrohr und dem Brennrohr durchtretendes Gas von niedrigerer Temperatur als der Flammgastemperatur gekühlt ist.

Dabei kann die Anordnung derart getroffen sein, daß durch den aus der Ringdüse austretenden Luftstrahl mit der Innenwand des Brennrohres eine Unterdruckzone begrenzt ist, die ringsum das Brennrohr mit einem Verbrennungsgase enthaltenden Raum auf der Außenseite des Brennrohres verbunden ist.

Damit wird erreicht, daß im Vergleich zu den Flammengasen verhältnismäßig kühle Verbrennungsgase an der Verbindungsstelle zwischen dem Luftzufuhrrohr und dem Brennrohr eingesaugt werden, die verhüten, daß das Brennrohr und/oder das Luftzufuhrrohr im Bereiche der Brennermündung eine unzulässige Temperaturerhöhung erfahren.

In der praktischen Ausgestaltung kann die Unterdruckzone durch einen zwischen der Brennrohrinnenwand und dem um einen vorbestimmten Betrag in das Brennrohr ragenden Luftzufuhrrohr ausgebildeten Ringspalt mit dem Verbrennungsgase enthaltenden Raum verbunden sein. Da sich eine besondere Abdichtung zwischen dem Brennrohr und dem Rekuperator erübrigt, kann das Brennrohr unter Ausbildung dieses Ringspaltes lose auf das Luftzufuhrrohr aufgesteckt sein.

Diese Ausführungsform kommt insbesondere bei geringem Gegendruck in der von dem Brennrohr umschlossenen Brennkammer in Frage, beispielsweise in Strahlrohren oder bei Brennern mit nur mäßiger Austrittsgeschwindigkeit der Verbrennungsgase, d. h. mit offenem Brennrohr. Wie die praktische Erfahrung gezeigt hat, ist es zweckmäßig, daß die Austrittsgeschwindigkeit des Luftstrahles aus der Ringdüse, bezogen auf die Nennleistung und eine Verbrennungslufttemperatur von mindestens 500 °C, wenigstens 50 m/sec beträgt.

Ohne die von diesem Luftstrahl über die Unterdruckzone angesaugten Verbrennungsgase würden schon bei geringstem Gegendruck, z. B. bei nach unten gerichteter Einbaulage durch den Auftrieb, extrem heiße Flammengase durch den zwischen dem Brennrohr und dem Rekuperator vorhandenen Ringspalt oder Schlitz hindurchtreten und die metallische Brennermündung rasch zerstören.

Bei größerem Gegendruck in der Brennkammer, beispielsweise, wenn den Flammengasen mit Hilfe einer düsenartigen Verengung eine hohe Geschwindigkeit erteilt werden soll, kann der ringförmige Luftstrahl unter Umständen nicht mehr genügend Verbrennungsgase ansaugen bzw. bei weiter zunehmendem Gegendruck das Eindringen der heißen Flammengase in den Ringspalt zwischen dem Brennrohr und dem Rekuperator nicht verhüten.

Unter solchen Einsatzbedingungen wird deshalb die Anordnung mit Vorteil derart getroffen, daß der Ringraum durch einen zwischen dem Brennrohr und dem Luftzufuhrrohr ausgebildeten Ringspalt mit einem die Außenseite des Brennraumes umschließenden Raum in Verbindung steht, wobei der Druck der vorgewärmten Verbrennungsluft in dem Ringraum höher ist als der in dem das Brennrohr umschließenden Raum. Dabei ergeben sich besonders einfache Verhältnisse, wenn das Brennrohr einfach lose in das Luftzufuhrrohr eingesteckt ist.

Dadurch, daß der Druck der Verbrennungsluft in dem Ringraum größer ist als der Druck der Verbrennungsgase auf der Außenseite des Brennrohres, strömt verhältnismäßig kalte Verbrennungsluft an der Brennermündung zwischen dem Brennrohr und dem Endbereich des Lufzufuhrrohres hindurch. Die sich daraus ergebenden. Luft-Leckverluste sind bei der Bemessung der Verbrennungsluftzufuhr einfach zu berücksichtigen. Zu einer Überhitzung der metallischen oder keramischen Bauteile kann es aber nicht mehr kommen. Da die Verbindung zwischen dem Rekuperator und dem Brennrohr an dem Außenmantel des Brennrohres liegt, ergibt sich im Betrieb von selbst ein Ringspalt an dieser Stelle, durch den die die Kühlung bewirkende Verbrennungsluft nach außen tritt.

Um bei sehr hoher Luftvorwärmung einen Verschleiß der metallischen Bauteile im Bereiche der Ringdüse zu verhüten, kann es zweckmäßig sein, daß diese auch innen durch ein Keramikrohr begrenzt ist, an das sich der Luftleitzylinder anschließt.

Bei allen Bauarten dieser neuen Industriebrenner ist es zweckmäßig, wenn der Rekuperator für eine Verbrennungsluftvorwärmung von wenigstens 50 %, vorzugsweise aber über 60 % der Ofengastemperatur ausgelegt ist.

Da die Luftzufuhr in den Brennraum durch die Ringdüse erfolgt, bleibt in dem Brenner ein verhältnismäßig großer freier Raum erhalten, der dadurch ausgenutzt werden kann, daß durch den Luftleitzylinder und die Ringdüse ein mit einem Kühlluftanschluß versehener axialer Kühlluftzufuhrkanal begrenzt ist, über den Kühlluft an dem Rekuperator vorbei in den Ofenraum eingeblasen werden kann. Außerdem können in dem Raum zwischen der Ringdüse und dem auch Brennstofflanze genannten Brennstoffzufuhrrohr Zünd- und Flammüberwachungseinrichtungen angeordnet sein, wofür eine Spaltbreite von mindestens 12 mm erforderlich ist.

Schließlich kann zur Zündstabilisierung durch die Ringdüse der Verbrennungsluft noch ein Drall erteilt werden.

In der Zeichnung sind Ausführungsbeispiele des Gegenstandes der Erfindung dargestellt. Es zeigen

Figur 1 einen Industriebrenner gemäß der Erfindung in einer ersten Ausführungsform, im axialen Schnitt, in einer Seitenansicht und in schematischer Darstellung,

Figur 2 einen Ausschnitt des Industriebrenners nach Figur 1, unter Veranschaulichung der Ringdüse, im axialen Schnitt und in einem anderen Maßstab und

Figur 3 einen Industriebrenner gemäß der Erfindung, in einer zweiten Ausführungsform, im Ausschnitt, im axialen Schnitt und in einer schematischen Seitenansicht.

Der in den Figuren in zwei Ausführungsformen dargestellte Industriebrenner dient zur Beheizung einer sich bei 1 anschließenden Ofenkammer eines Industrieofens, dessen Kammerwandung 2 eine zylindrische Durchgangsöffnung 3 aufweist, in die der Brenner 4 eingesetzt ist.

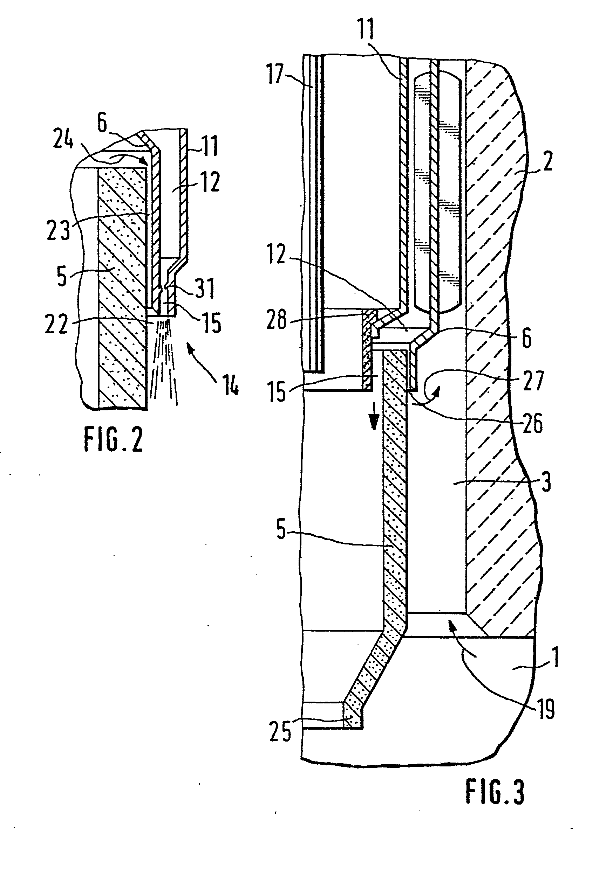

Der Brenner 4 weist ein zylindrisches keramisches Brennrohr 5 auf, in das ein koaxiales Luftzufuhrrohr 6 mündet, das einen Teil eines Rekuperators 7 bildet. Der Rekuperator 7 ist als sogenannter Rippenrekuperator ausgeführt ; er weist stirnseitig miteinander verbundene Rohrabschnitte 8 auf, die nach innen und nach außen ragende Wärmetauscherrippen 9, 10 tragen. In das Luftzufuhrrohr 6 ist ein koaxialer Luftleitzylinder 11 eingesetzt, welcher mit dem Luftzufuhrrohr 6 einen Ringraum 12 begrenzt, in welchem die Wärmetauscherrippen 9 des Rekuperators 7 liegen und der durch einen Verbrennungsluftzufuhrstutzen 13 mit Verbrennungsluft beaufschlagt ist. An den Ringraum 12 ist im Bereiche der Brennermündung 14 eine Ringdüse 15 angeschlossen, die im einzelnen in Figur 2 veranschaulicht ist und aus der die bei 13 zugeführte Verbrennungsluft mit erhöhter Geschwindigkeit in Gestalt eines ringförmigen Luftstrahles längs der Innenwandung des eine Brennkammer 16 umschließenden Brennrohres 5 austritt.

Im Inneren des Luftleitzylinders 11 ist ein koaxiales Brennstoffzufuhrrohr 17 kleineren Durchmessers angeordnet, das auch als Brennstofflanze bezeichnet wird und bis in die Nähe der Brennermündung 14 reicht.

Im Betrieb wird über das Brennstoffzufuhrrohr 17 ein flüssiger oder gasförmiger Brennstoff zugeführt, wie dies durch einen Pfeil 18 angedeutet ist, der sich im Bereiche der Brennermündung 14 und in dem Brennraum 16 mit dem aus der Ringdüse 15 austretenden ringförmigen Verbrennungsluftstrahl vermischt und nach der Zündung in dem von dem aus Siliziumcarbid bestehenden Brennrohr 5 umschlossenen Brennraum 16 unter Ausbildung einer entsprechenden Flamme verbrennt.

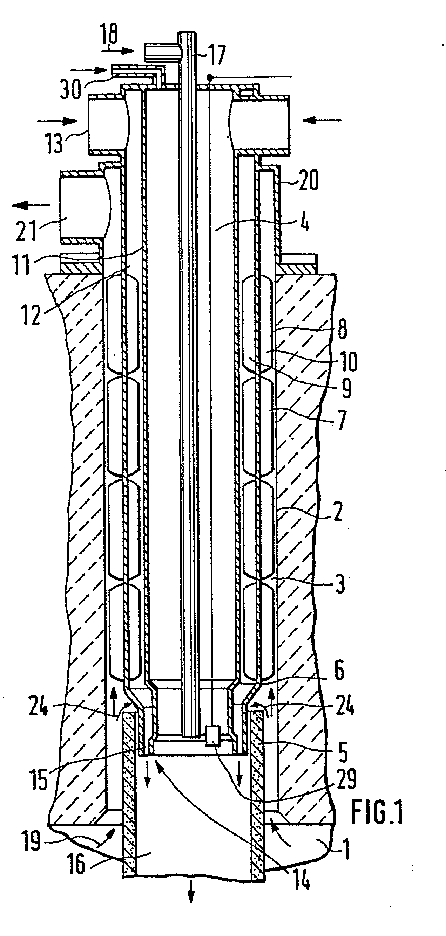

In Figur 1 ist ein offenes Brennrohr 5 veranschaulicht ; die Verbrennungsgase treten aus der Brennkammer 16 in die Ofenkammer 1 ein und strömen schließlich, wie dies durch Pfeile 19 angedeutet ist, durch den zwischen den Brennrohr 5 und dem Innenmantel der Öffnung 3 der Ofenkammerwandung 2 begrenzten Ringspalt in eine Abgassammelkammer 20, von wo aus sie über einen Abgasstutzen 21 abgeführt werden. Dabei geben die Verbrennungsgase auf ihren Weg aus der Ofenkammer 1 in die Abgassammelkammer 20 einen Teil ihrer Wärme über die Wärmeaustauscherrippen 10, 9 des Rekuperators 7 an die zugeführte Verbrennungsluft ab, so daß diese entsprechend vorgewärmt wird.

Der Rekuperator 7 ist derart ausgelegt, daß die Verbrennungsluft auf wenigstens 50 %, vorzugsweise aber auf 65 % und mehr der Temperatur der Ofengastemperatur vorgewärmt werden, wie sie in der Ofenkammer 1 herrscht. Dadurch wird eine wesentliche Erhöhung des Wirkungsgrades des Brenners erreicht ; andererseits werden aber die im Bereiche der Brennermündung 14 liegenden Bauteile des Brenners einer hohen Temperaturbeanspruchung ausgesetzt. Bei einer Prozeßtemperatur von ca. 1 200 °C liegt der Brennermündungsbereich unter diesen Bedingungen auf einer Temperatur von über 1 000 °C.

Um einen übermäßigen Verschleiß des Brenners im Bereiche der Brennermündung 14 zu verhüten, sind besondere Vorkehrungen getroffen, wie sie im folgenden erläutert werden sollen :

Bei der Ausführungsform nach den Figuren 1 und 2 ist die Anordnung derart getroffen, daß das keramische Brennrohr 5 auf das entsprechend verjüngte Luftzufuhrrohr 6 lose aufgeschoben ist, derart, daß dieses um einen vorbestimmten Betrag in das Brennrohr 5 ragt. Der aus der Ringdüse 15 mit einer Geschwindigkeit von wenigstens 50 m/sec. — bezogen auf Nennlastbetrieb und eine Verbrennungslufttemperatur von 550 °C an der Brennermündung 14 — austretende ringförmige Verbrennungsluftstrom erstreckt sich, wie bereits erwähnt, längs der Innenmantelfläche des Brennrohres 5. Er begrenzt dabei mit der Innenmantelfläche des Brennrohres 5 eine ringförmige Unterdruckzone 22, die über einen zwischen dem in das Brennrohr ragenden Teil des Luftzufuhrrohres 6 und der Brennrohrinnenmantelfläche vorhandenen Ringspalt 23 mit dem von den aus der Ofenkammer 1 kommenden Verbrennungsgasen durchströmten Ringraum zwischen dem Brennrohr 5 und der Innenwandung der Öffnung 3 der Ofenkammerwandung 2 verbunden ist. Unter der Wirkung des in der Unterdruckzone 22 herrschenden Unterdruckes wird Verbrennungsgas durch den Ringspalt 23 angesaugt, wie dies durch Pfeile 24 angedeutet ist. Da dieses Verbrennungsgas — verglichen mit den Flammengasen — verhältnismäßig kühl ist, werden auch das Luftzufuhrrohr 6 und das Brennrohr 5 im Bereiche der Brennermündung 14 gekühlt, so daß sie trotz der starken Luftvorwärmung in einem vom Materialverschleiß her zulässigen Betriebstemperaturbereich gehalten werden.

Die Ringdüse 15 weist, wie aus Figur 2 ersichtlich, einen kleineren Durchmesser als die Innenmantelfläche des Brennrohres 5 auf ; ihr Abstand von der Innenmantelfläche des Brennrohres 5 ist entsprechend den jeweiligen Gegebenheiten zu bemessen.

Der zwischen dem Luftzufuhrrohr 6 und dem Brennrohr 5 vorhandene Ringspalt 23 läßt sich einfach dadurch erzielen, daß das keramische Brennrohr 5 lose auf das Luftzufuhrrohr 6 in der in Figur 1 dargestellten Weise aufgesteckt ist. Grundsätzlich ist es aber auch denkbar, eigene, beispielsweise achsparallele Verbrennungsgas-Durchlaßkanäle im Bereiche des Ringspaltes 23 vorzusehen, wozu beispielsweise die Innenmantelfläche des Brennrohres 5 mit entsprechenden achsparallelen Nuten versehen oder das Luftzufuhrrohr 6 an seinem in dem Brennrohr 5 steckenden Teil gewellt ausgebildet sein könnten. Auch wäre es denkbar, in dem Brennrohr 5 im Bereiche des Ringspaltes 23 radial nach außen führende Öffnungen vorzusehen, durch die Verbrennungsgase in die Unterdruckzone 22 einströmen können.

Der in den Figuren 1, 2 dargestellte, beschriebene Brenner 4 ist für Einsatzbedingungen bestimmt, bei denen in der Brennkammer 16 lediglich ein geringer Gegendruck vorhanden ist. Dies gilt beispielsweise für die Verwendung des Brenners 4 in Strahlrohren oder bei Betrieb mit nur mäßiger Austrittsgeschwindigkeit der Verbrennungsgase, d. h. mit offenem Brennrohr wie in den Figuren 1 und 2 veranschaulicht.

Soll ein mit der erwähnten hohen Verbrennungsluftvorwärmung arbeitender Brenner der beschriebenen Art unter Betriebsbedingungen zum Einsatz kommen, bei denen ein verhältnismäßig hoher Gegendruck in der Brennkammer 16 zu erwarten ist, beispielsweise, wenn den Flammengasen mit Hilfe einer düsenartigen Verengung 25 am Ende des Flammrohres 5 eine hohe Geschwindigkeit erteilt werden soll, so kann die beschriebene Ansaugung von Verbrennungsgasen über den Ringspalt 23 und die Unterdruckzone 22 nicht mehr wirksam werden. Der Brenner erhält dann die Ausbildung nach Figur 3.

Bei dem in Figur 3 lediglich im Ausschnitt dargestellten Brenner sind mit der Ausführungsform nach den Figuren 1, 2 übereinstimmende Teile mit den gleichen Bezugszeichen versehen ; sie brauchen im einzelnen nicht weiter erläutert zu werden.

Im Gegensatz zu den Verhältnissen bei der Ausführungsform nach den Figuren 1, 2 ist das keramische Brennrohr 5 in das entsprechend zylindrisch verjüngte Luftzufuhrrohr 6 lose eingesteckt, ohne daß eine besondere Abdichtung zwischen dem Brennrohr 5 und dem Luftzufuhrrohr 6 vorhanden wäre. Gleichzeitig ist der in dem Ringraum 12 herrschende Druck der Verbrennungsluft derart gewählt, daß er höher liegt als der Verbrennungsgasdruck, wie er in der Öffnung 3 im Bereiche der Außenseite des Brennrohres 5 herrscht.

Im Betrieb bildet sich wegen der unterschiedlichen thermischen Ausdehnung des metallischen Luftzufuhrrohres 6 und des keramischen Brennrohres 5 ein Ringspalt 26 zwischen der Außenmantelfläche des Brennrohres 5 und der Innenmantelfläche des das Brennrohr 5 umgebenden Teiles des Luftzufuhrrohres 6. Durch diesen Ringspalt 26 tritt wegen des erwähnten Überdruckes in dem Ringraum 12, verglichen mit den Flammengasen, verhältnismäßig kühle Verbrennungsluft nach außen, die damit das Brennrohr 5 und den dieses umgebenden Teil des Luftzufuhrrohres 6 kühlt, so daß diese Teile keine unzulässige Betriebstemperatur annehmen können.

Die durch die über den Ringspalt 26 abströmende Luft bedingten Leckverluste werden bei der Auslegung der Verbrennungsluftzufuhr zu dem Brenner berücksichtigt ; die austretende Luft ist im übrigen in Figur 3 durch Pfeile 27 angedeutet.

Der Ringspalt 26 kann im übrigen ebenfalls durch in dem keramischen Brennrohr 5 ausgebildete achsparallele Nuten bzw. durch entsprechende Rippen an dem Endteil des Luftzufuhrrohres 6 ersetzt oder ergänzt werden. Auch ist es denkbar, daß im Bereiche des Ringspaltes 26 für die kühlende Verbrennungsluft radial nach außen gerichtete Durchgangskanäle geringen Querschnitts in dem Brennrohr und/oder dem diesen umschließenden Teil des Luftzufuhrrohres 6 vorhanden sind. Die aus der Ringdüse 15 ausströmende Verbrennungsluft streicht im übrigen in Gestalt eines ringförmigen Luftstrahles längs der Innenmantelfläche des Brennrohres 5 nach unten, so daß das Brennrohr 5 auch auf seiner Innenseite gekühlt ist.

Bei sehr hoher Luftvorwärmung ist es erforderlich, im Bereiche der Brennermündung 14 auch für die Ringdüse 15 selbst besondere Vorkehrungen zu treffen. Dazu kann in der aus figur 3 ersichtlichen Weise die Ringdüse 15 innen durch ein Keramikrohr 28 begrenzt sein, das sich an den entsprechend verjüngten Luftleitzylinder 11 anschließt. Ein derartiges Keramikrohr 28 kann naturgemäß auch bei der Ausführungsform nach den Figuren 1, 2 Verwendung finden.

Da die Verbrennungsluftzufuhr bei beiden dargestellten Ausführungsformen durch die Ringdüse 15 längs der Innenmantelwand des Brennrohres 5 erfolgt, bleibt der Innenraum des Luftleitzylinders 11 auch im Bereiche der Brennermündung 14 im wesentlichen frei. Es können deshalb in diesem Raum zwischen der Ringdüse 15 und dem Brennstoffzufuhrrohr 17 Zünd- und Flammüberwachungseinrichtungen angeordnet werden, wie sie in Figur 1 bei 29 angedeutet sind. Außerdem kann über den Luftleitzylinder 11 ungehindert Kühlluft in die Ofenkammer 1 eingeblasen werden, die auf ihrem gesamten Weg durch den Brenner 4 an dem Rekuperator 7 vorbeigeleitet wird, so daß eine unerwünschte Vorwärmung der Kühlluft unterbleibt. Der Kühlluftzufuhrstutzen ist bei 30 angedeutet. In die Ringdüse 15 können Drallbleche 31 eingesetzt sein (Figur 2).

## Ansprüche

1. Industriebrenner mit rekuperativer Luftvorwärmung für gasförmige oder flüssige Brennstoffe, insbesondere zur Beheizung von Ofenräumen in Industrieöfen, mit einem in einem koaxialen keramischen Brennrohr (5) mündenden Luftzufuhrrohr (6), das einen Teil eines auf der einen Seite von den Verbrennungsgasen und auf der anderen Seite im Gegenstrom von der Verbrennungsluft bestrichenen Rekuperators (7) bildet und ein bis in den Bereich der Brennermündung (14) führendes Brennstoffzufuhrrohr (17) kleineren Durchmessers umschließt, wobei in dem Luftzufuhrrohr (6) ein mit diesem einen der Verbrennungsluftzufuhr dienenden Ringraum (12) begrenzender Luftleitzylinder (11) angeordnet ist, dadurch gekennzeichnet, daß an den Ringraum (12) im Bereiche der Mündung des Luftzufuhrrohres (6) eine an der Innenwandung des Brennrohres (5) angeordnete Ringdüse (15) angeschlossen ist, aus der die Verbrennungsluft mit erhöhter Geschwindigkeit längs der Innenwandung des Brennrohres (5) in Gestalt eines ringförmigen Luftstrahles austritt und daß das Luftzufuhrrohr (6) an der Brennermündung (14) im Bereiche seines Endteiles zusätzlich durch zwischen dem Luftzufuhrrohr (6) und dem Brennrohr (5) durchtretendes Gas von niedrigerer Temperatur als der Flammengastemperatur gekühlt ist.

2. Industriebrenner nach Anspruch 1, dadurch gekennzeichnet, daß durch den aus der Ringdüse (15) austretenden Luftstrahl mit der Innenwand des Brennrohres (5) eine Unterdruckzone (22) begrenzt ist, die rings um das Brennrohr (5) mit einem Verbrennungsgase enthaltenden Raum (3) auf der Außenseite des Brennrohres (5) verbunden ist.

3. Industriebrenner nach Anspruch 2, dadurch gekennzeichnet, daß die Unterdruckzone (22) durch einen zwischen der Brennrohrinnenwand und dem um einen vorbestimmten Betrag in das Brennrohr (5) ragenden Luftzufuhrrohr (6) ausgebildeten Ringspalt (23) mit dem Verbrennungsgase enthaltenden Raum verbunden ist.

4. Industriebrenner nach Anspruch 3, dadurch gekennzeichnet, daß das Brennrohr (5) unter Ausbildung des Ringspaltes (23) lose auf das Luftzufuhrrohr (6) aufgesteckt ist.

5. Industriebrenner nach Anspruch 1, dadurch gekennzeichnet, daß der Ringraum (12) durch einen zwischen dem Brennrohr (5) und dem Luftzufuhrrohr (6) ausgebildeten Ringspalt (26) mit einem die Außenseite des Brennrohres (5) umschließenden Raum (3) in Verbindung steht und der Druck der vorgewärmten Verbrennungsluft in dem Ringraum (12) höher ist als der Druck in dem das Brennrohr (5) umschließenden Raum.

6. Industriebrenner nach Anspruch 5, dadurch gekennzeichnet, daß das Brennrohr (5) lose in das Luftzufuhrrohr (6) eingesteckt ist.

7. Industriebrenner nach einem der vorhergehenden Ansprüche, dadurch gekennzeichnet, daß die Austrittsgeschwindigkeit des Luftstrahles aus der Ringdüse (15), bezogen auf die Nennleistung des Brenners und eine Verbrennungslufttemperatur von mindestens 500 °C, wenigstens 50 m/sec. beträgt.

8. Industriebrenner nach einem der vorhergehenden Ansprüche, dadurch gekennzeichnet, daß der Rekuperator (7) für eine Verbrennungsluftvorwärmung von wenigstens 50 % der Ofengastemperatur ausgelegt ist.

9. Industriebrenner nach einem der vorhergehenden Ansprüche, dadurch gekennzeichnet, daß die Ringdüse (15) innen durch ein Keramikrohr (28) begrenzt ist.

10. Industriebrenner nach einem der vorhergehenden Ansprüche, dadurch gekennzeichnet, daß durch den Luftleitzylinder (11) und die Ringdüse (15) ein mit einem Kühlluftanschluß (30) versehener axialer Kühlluftzufuhrkanal begrenzt ist.

11. Industriebrenner nach einem der vorhergehenden Ansprüche, dadurch gekennzeichnet, daß in dem Raum zwischen der Ringdüse (15) und dem Brennstoffzufuhrrohr (17) Zünd- und Flamm-überwachungseinrichtungen (29) angeordnet sind.

12. Industriebrenner nach einem der vorhergehenden Ansprüche, dadurch gekennzeichnet, daß durch die Ringdüse (15) der Verbrennungsluft ein Drall erteilbar ist.

## Claims

1. An industrial burner with recuperative air preheating system for gaseous or liquid fuels, in particular for heating furnace chambers in industrial furnaces, comprising an air intake pipe (6) opening into a coaxial ceramic combustion pipe (5) and forming part of a recuperator (7) which has its one side exposed to contact with the combustion gases and its other side to the combustion air sweeping over it in counter-current, which air intake pipe (6) further embraces an air feed pipe (17) of smaller diameter leading into the area of the burner nozzle (14), and has arranged within it an air guide cylinder (11) defining together with it an annular space (12) serving as combustion air intake, characterized in that the annular space has connected to it, in the area of the opening of the air intake pipe (6), a ring nozzle (15) arranged on the inner wall of the combustion pipe (5) through which the combustion air escapes at increased velocity in the form of an annular jet, and that the air intake pipe (6) is additionally cooled at the burner nozzle (14) in the area of its end portion by gas of a temperature lower than the flame gas temperature escaping between the air intake pipe (6) and the combustion pipe (5).

2. An industrial burner in accordance with claim 1, characterized in that the air jet escaping through the ring nozzle (15) and the inner wall of the combustion pipe (5) define between them a vacuum zone (22) connected all around the combustion pipe (5) with a space (3) containing combustion gases and provided around the outside of the combustion pipe (5).

3. An industrial burner in accordance with claim 2, characterized in that the vacuum zone (22) is connected with the space containing combustion gases via an annular gap (23) defined between the inner wall of the combustion pipe and the air intake pipe (6) which projects into the combustion pipe (5) by a predetermined length.

4. An industrial burner in accordance with claim 3, characterized in that the combustion pipe (5) si loosely fitted upon the air intake pipe (6), thus forming the annulayr gap (23).

5. An industrial burner in accordance with claim 1, characterized in that the annular space (12) communicates with a space 3 enclosing the outer face of the combustion pipe (5) via an annular gap (26) defined between the combustion pipe (5) and the air intake pipe (6) and that the pressure of the pre-heated combustion air in the annular space (12) is higher than the pressure in the space enclosing the combustion pipe (5).

6. An industrial burner in accordance with claim 5, characterized in that the combustion pipe (5) is fitted loosely into the air intake pipe (6).

7. An industrial burner in accordance with any of the preceding claims characterized in that the velocity with which the air jet escapes from the ring nozzle (15), related to the nominal rating of the burner and a combustion air temperature of at least 500 °C, is at least 50 m/sec.

8. An industrial burner in accordance with any of the preceding claims, characterized in that the recuperator (7) is designed for preheating the combustion air to at least 50 % of the furnace gas temperature.

9. An industrial burner in accordance with any of the preceding claims, characterized in that the ring nozzle (15) has its inner wall formed by a ceramic pipe (28).

10. An industrial burner in accordance with any of the preceding claims, characterized in that the air guide cylinder (11) and the annular nozzle (15) define together an axial cooling air intake channel provided with a cooling air connection (30).

11. An industrial burner in accordance with any of the preceding claims, characterized in that ignition and flame monitoring means (29) are arranged in the space between the ring nozzle (15) and the fuel supply pipe (17).

12. An industrial burner in accordance with any of the preceding claims, characterized in that the ring nozzle (15) can be adapted to impart a twist to the combustion air.

## Revendications

1. Brûleur industriel avec préchauffage de l'air par récupération, pour combustibles gazeux ou liquides, destiné notamment au chauffage de chambres de fours industriels, qui comporte une conduite d'admission d'air (6), laquelle débouche dans un tube-foyer ou de combustion coaxial (5) en céramique et constitue une partie d'un récupérateur (7) dont un côté est léché par les gaz de combustion et l'autre côté, à contre-courant, par l'air comburant, et qui entoure une conduite d'alimentation en combustible (17), à plus faible diamètre, laquelle mène jusque dans la zone du nez ou orifice de sortie (14) du brûleur, un cylindre de guidage de l'air (11), qui délimite, avec la conduite d'admission d'air (6), une chambre annulaire (12) servant pour l'admission de l'air comburant, étant disposé dans la conduite d'admission d'air (6), caractérisé en ce qu'à la chambre annulaire (12) est raccordée, dans la zone de l'orifice de sortie de la conduite d'admission d'air (6), une tuyère annulaire (15) prévue à la paroi intérieure du tube-foyer ou de combustion (5), tuyère de laquelle l'air comburant sort à plus grande vitesse le long de la paroi intérieure du tube-foyer (5), sous la forme d'un jet d'air annulaire, et en ce que la conduite d'admission d'air (6) est en outre refroidie au nez (14) du brûleur, dans la zone de son tronçon terminal, par un gaz dont la température est inférieure à celle des gaz de flamme et qui passe entre la conduite d'admission d'air (6) et le tube-foyer (5).

2. Brûleur industriel selon la revendication 1, caractérisé en ce que le jet d'air sortant de la tuyère annulaire (15) délimite, avec la paroi intérieure du tube-foyer ou de combustion (5), une zone de dépression (22) qui est reliée, tout autour du tube-foyer (5), à un espace (3) contenant des gaz de combustion et situé sur la face extérieure du tube-foyer (5).

3. Brûleur industriel selon la revendication 2, caractérisé en ce que la zone de dépression (22) est reliée à l'espace contenant des gaz de combustion par une fente annulaire (23) formée entre la paroi intérieure du tube-foyer et la conduite d'admission d'air (6) qui fait saillies, sur une longueur préétablie, à l'intérieur du tube-foyer (5).

4. Brûleur industriel selon la revendication 3, caractérisé en ce que le tube-foyer ou de combustion (5) est enfoncé ou enfiché, sans serrage, sur la conduite d'admission d'air, avec formation de la fente annulaire (23).

5. Brûleur industriel selon la revendication 1, caractérisé en ce que la chambre annulaire (12) est en liaison avec un espace (3) qui entoure la face extérieure du tube-foyer (5), par l'intermédiaire d'une fente annulaire (26) formée entre le tube-foyer (5) et la conduite d'admission d'air (6), la pression de l'air comburant préchauffé étant plus élevée dans la chambre annulaire (12) que celle qui règne dans l'espace entourant le tube-foyer (5).

6. Brûleur industriel selon la revendication 5, caractérisé en ce que le tube-foyer (5) est enfiché sans serrage dans la conduite d'admission d'air (6).

7. Brûleur industriel selon l'une quelconque des revendications précédentes, caractérisé en ce que la vitesse du jet d'air, à la sortie de la tuyère annulaire (15) rapportée à la puissance nominale du brûleur et à une température de l'air comburant d'au moins 500 °C, est au minimum de 50 m/sec.

8. Brûleur industriel selon l'une quelconque des revendications précédentes, caractérisé en ce que le récupérateur (7) est conçu pour un préchauffage de l'air comburant à une température au moins égale à 50 % de la température des gaz du four.

9. Brûleur industriel selon l'une quelconque des revendications précédentes, caractérisé en ce que la tuyère annulaire (15) est délimitée à l'intérieur par un tube de céramique (28).

10. Brûleur industriel selon l'une quelconque des revendications précédentes, caractérisé en ce que le cylindre de guidage de l'air (11) et la tuyère annulaire (15) délimitent un conduit d'admission d'air de refroidissement axial ; muni d'un raccord ou d'une tubulure d'admission de l'air de refroidissement (30).

11. Brûleur industriel selon l'une quelconque des revendications précédentes, caractérisé en ce que des dispositifs de contrôle de l'allumage et de la flamme (29) sont disposés dans l'espace compris entre la tuyère annulaire (15) et la conduite d'alimentation en combustible (17).

12. Brûleur industriel selon l'une quelconque des revendications précédentes, caractérisé en ce qu'une turbulence peut être imprimée à l'air comburant par la tuyère annulaire (15).

FIG.1

FIG.2

FIG.3